# FASCICULE DE BREVET EUROPEEN

(11) **EP 2 016 264 B1**
(45) Date de publication et mention de la délivrance du brevet: **14.07.2010**
(21) Numéro de dépôt: 07765998.5
(22) Date de dépôt: 04.05.2007
(51) Int. Cl.: F01N 11/00

(54) **SYSTEME ET PROCEDE DE CONTROLE DE L'ETAT DE FONCTIONNEMENT D'UN DISPOSITIF CATALYTIQUE COMPRENANT DEUX ELEMENTS CATALYTIQUES D'OXYDATION DISPOSES EN SERIE DANS LA LIGNE D'ECHAPPEMENT D'UN MOTEUR A COMBUSTION INTERNE**
SYSTEM UND VERFAHREN ZUR ÜBERWACHUNG DES BETRIEBSZUSTANDS EINER KATALYTISCHEN VORRICHTUNG MIT ZWEI SERIELL IN DER ABGASLEITUNG EINES VERBRENNUNGSMOTORS ANGEORDNETEN BAUTEILEN ZUR KATALYTISCHEN OXIDATION
SYSTEM AND METHOD TO MONITOR THE OPERATING STATUS OF A CATALYTIC DEVICE COMPRISING TWO CATALYTIC OXIDATION COMPONENTS ARRANGED IN SERIES IN THE EXHAUST LINE OF AN INTERNAL COMBUSTION ENGINE

(30) Priorité: 10.05.2006 FR 0604122
(43) Date de publication de la demande: 21.01.2009
(73) Titulaire: RENAULT S.A.S., 92100 Boulogne Billancourt (FR)
(72) Inventeur: PLOTON, Violaine, F-91640 Machery (FR); PILLOT, Adrien, F-91290 Arpajon (FR); THOUVENEL, Nicolas, F-91610 Ballancourt Sur Essonne (FR)
(86) Numéro de dépôt international: PCT/FR2007/051217
(87) Numéro de publication internationale: WO 2007/128937

(56) Documents cités:
- EP-A2- 1 154 131
- FR-A- 2 877 392
- JP-A- 2005 256 633
- US-A1- 2004 204 818

## Description

La présente invention concerne le domaine du traitement des gaz d'échappement d'un moteur à combustion interne, par exemple de véhicule automobile, et, en particulier, d'un moteur à combustion interne fonctionnant en mélange pauvre, notamment un moteur diesel ou à essence.

Plus particulièrement, l'invention concerne un système et un procédé de contrôle de l'état de fonctionnement d'un dispositif catalytique comprenant deux éléments catalytiques d'oxydation, disposés en série dans la ligne d'échappement d'un moteur à combustion interne.

Les moteurs à combustion interne produisent des gaz d'échappement qui contiennent des substances polluantes, telles que les oxydes d'azote NOₓ, les hydrocarbures imbrûlés HC, et le monoxyde de carbone CO, qu'il est nécessaire de traiter avant de les évacuer dans l'atmosphère.

Aussi, les véhicules automobiles sont souvent pourvus d'un dispositif catalytique disposé dans la ligne d'échappement du moteur, permettant d'oxyder les molécules réductrices telles le monoxyde de carbone CO et les hydrocarbures imbrûlés HC.

La demande de brevet français FR 2 833 994 (RENAULT) divulgue un système et un procédé de contrôle de l'état de fonctionnement d'un convertisseur catalytique d'une ligne d'échappement d'un moteur à combustion interne, comprenant l'excitation du convertisseur par injection de carburant dans la ligne d'échappement et le contrôle de la valeur d'une variable représentative de la quantité de chaleur dégagée par une réaction d'oxydation au sein du convertisseur catalytique.

Toutefois, de tels systèmes (voir p. ex. aussi la demande EP1 154 131) ne permettent pas, en cas de présence de deux éléments catalytiques d'oxydation, généralement disposés en série dans la ligne d'échappement d'un moteur à combustion interne et en amont d'un filtre à particules, de déterminer un défaut de fonctionnement de l'un ou l'autre des éléments catalytiques lorsque le filtre à particules est colmaté, et que la régénération du filtre à particules durant le roulage du véhicule ne fonctionne pas.

Le but de l'invention est donc de pallier à ces inconvénients, et de permettre de contrôler le bon fonctionnement d'un dispositif catalytique comprenant deux éléments catalytiques d'oxydation disposés en série dans la ligne d'échappement d'un moteur à combustion interne.

Aussi, selon un aspect de l'invention, il est proposé un système de contrôle de l'état de fonctionnement d'un dispositif catalytique comprenant deux éléments catalytiques d'oxydation disposés en série dans la ligne d'échappement d'un moteur à combustion interne. Le système comprend une unité de commande électronique, et au moins un injecteur commandé de carburant dans le moteur. En outre, le système comprend un injecteur additionnel commandé de carburant, disposé entre les deux éléments catalytiques, et des premiers et deuxièmes moyens de détermination d'une première température et d'une deuxième température des gaz d'échappement du moteur, respectivement entre les deux éléments catalytiques, et en aval du deuxième élément catalytique. En outre, le système comprend des moyens de commande de deux injections successives prédéterminées, respectivement de carburant dans le moteur et entre lesdits deux éléments catalytiques. De plus, le système comprend des moyens de détermination de l'état de fonctionnement respectif desdits deux éléments catalytiques en fonction desdites première et deuxième températures obtenues respectivement durant un premier délai prédéterminé et durant un deuxième délai prédéterminé, commençant respectivement auxdites première et deuxième injections, et en fonction d'une première température de consigne et d'une deuxième température de consigne.

Un tel système permet de diagnostiquer un problème de fonctionnement de l'un ou des deux éléments catalytiques, notamment lorsque le filtre à particules, disposé en aval du dispositif catalytique, est colmaté, et que sa régénération durant des phases de roulage du véhicule ne fonctionne pas.

Un tel diagnostic permet de déterminer rapidement et de façon précise si l'un ou les deux éléments catalytiques sont défaillants, et d'éviter ainsi de nombreuses et coûteuses opérations de maintenance.

Selon un mode de réalisation, lesdits moyens de détermination de l'état de fonctionnement respectif des deux éléments catalytiques comprennent des premiers moyens de comparaison de ladite première température durant ledit premier délai prédéterminé et de ladite première température de consigne. En outre, lesdits moyens de détermination de l'état de fonctionnement respectif des deux éléments catalytiques comprennent des deuxièmes moyens de comparaison de ladite deuxième température durant ledit deuxième délai prédéterminé et de ladite deuxième température de consigne.

Selon un mode de réalisation, lesdits moyens de détermination de l'état de fonctionnement respectif des deux éléments catalytiques sont adaptés pour être désactivés lorsque le véhicule est en mouvement, lorsqu'un défaut de fonctionnement du capteur de vitesse du véhicule est détecté, lorsqu'un défaut de fonctionnement d'un desdits premier ou deuxième moyens de détermination de température est détecté, lorsqu'un défaut de commande desdites deux injections successives prédéterminées est détecté, ou lorsqu'un défaut de fonctionnement dudit injecteur additionnel commandé ou de sa pompe d'alimentation en carburant est détecté.

Selon un mode de réalisation, lesdits premier et deuxième moyens de détermination respective d'une première température et d'une deuxième température des gaz d'échappement du moteur comprennent respectivement un premier capteur de température et un deuxième capteur de température.

Dans un mode de réalisation, lesdits moyens de détermination de l'état de fonctionnement respectif des deux éléments catalytiques sont adaptés pour déterminer une défaillance du premier élément catalytique lorsque ladite première température durant ledit premier délai prédéterminé reste inférieure à ladite première température de consigne.

Dans un mode de réalisation, lesdits moyens de détermination de l'état de fonctionnement respectif des deux éléments catalytiques sont adaptés pour déterminer une défaillance du deuxième élément catalytique lorsque ladite deuxième température durant ledit deuxième délai prédéterminé reste inférieure à ladite deuxième température de consigne.

Selon un aspect de l'invention, il est également proposé un procédé de contrôle de l'état de fonctionnement d'un dispositif catalytique comprenant deux éléments catalytiques d'oxydation disposés en série dans la ligne d'échappement d'un moteur à combustion interne. On commande deux injections successives prédéterminées, respectivement de carburant dans le moteur et entre lesdits éléments catalytique. En outre, on détermine l'état de fonctionnement respectif des deux éléments catalytiques en fonction d'une première température entre les deux éléments catalytiques durant un premier délai prédéterminé, d'une deuxième température en aval du deuxième élément catalytique durant un deuxième délai prédéterminé, d'une première température de consigne, et d'une deuxième température de consigne, lesdits premier et deuxième délais prédéterminés commençant respectivement auxdites première et deuxième injections.

Selon un mode de mise en oeuvre, la détermination de l'état de fonctionnement respectif des deux éléments catalytiques comprend une première comparaison de ladite première température durant ledit premier délai prédéterminé et de ladite première température de consigne, et une deuxième comparaison de ladite deuxième température durant ledit deuxième délai prédéterminé et de ladite deuxième température de consigne.

Selon un mode de mise en oeuvre, on désactive la détermination de l'état de fonctionnement respectif des deux éléments catalytiques lorsque le véhicule est en mouvement, lorsqu'un défaut de fonctionnement du capteur de vitesse du véhicule est détecté, lorsqu'un défaut de fonctionnement d'un desdits premier ou deuxième moyen de détermination de température est détecté, lorsqu'un défaut de commande desdites deux injections successives prédéterminées est détecté, ou lorsqu'un défaut de fonctionnement dudit injecteur additionnel commandé ou de sa pompe d'alimentation en carburant est détecté.

Selon un mode de réalisation, on détermine une défaillance respective du premier ou deuxième élément catalytique lorsque ladite première ou deuxième température durant ledit premier ou deuxième délai prédéterminé reste respectivement inférieure à ladite première ou deuxième température de consigne.

D'autres buts, caractéristiques et avantages de l'invention apparaîtront à la lecture de la description suivante, de quelques exemples nullement limitatifs, et faite en référence aux dessins annexés, sur lesquels :
- la figure 1 est un schéma synoptique d'un mode de réalisation d'un système selon un aspect de l'invention ; et
- la figure 2 illustre le fonctionnement du procédé selon un aspect de l'invention.

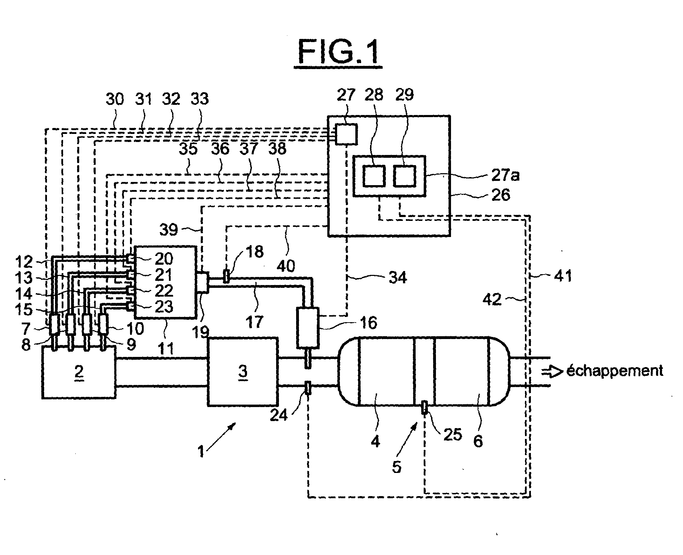

Sur la figure 1, la ligne d'échappement 1 d'un véhicule automobile équipé d'un moteur à combustion interne 2, comprend un dispositif catalytique d'oxydation des hydrocarbures et du monoxyde de carbone comprenant un premier élément catalytique d'oxydation 3 et un deuxième élément catalytique d'oxydation 4, présentement disposé en première partie d'un boîtier 5 de filtre à particules catalytique 6.

Le boîtier 5 comprend, en outre, un filtre à particules catalytique 6 disposé en aval du deuxième élément catalytique d'oxydation 4.

Le moteur à combustion interne 2 comprend quatre injecteurs 7, 8, 9 et 10, pour injecter du carburant directement dans les cylindres du moteur 2. Ces quatre injecteurs 7, 8, 9, 10 sont respectivement reliés à un réservoir de carburant 11 par des conduits 12, 13, 14 et 15.

En outre, le système comprend un injecteur additionnel 16 disposé en aval du premier élément catalytique d'oxydation 3, et en amont du deuxième élément catalytique d'oxydation 4.

L'injecteur additionnel 16 permet de pulvériser du carburant dans les gaz d'échappement du moteur 2, entre les deux éléments catalytiques d'oxydation 3 et 4.

L'injecteur additionnel 16 est alimenté en carburant par l'intermédiaire d'un conduit 17 reliant l'injecteur 16 au réservoir de carburant 11. Le conduit d'alimentation en carburant 17 est équipé d'un capteur 18 de mesure de la pression d'alimentation en carburant de l'injecteur 16.

Une pompe à carburant 19 permet de fournir du carburant sous pression à l'injecteur 6 par le conduit 7. Des pompes à carburant 20, 21, 22 et 23 permettent de fournir du carburant sous pression respectivement aux injecteurs 7, 8, 9 et 10 par les conduits 12, 13, 14 et 15.

Un premier capteur de température 24 et un deuxième capteur de température 25 sont disposés dans la ligne d'échappement, respectivement entre les deux éléments catalytiques d'oxydation 3 et 4, et entre le deuxième élément catalytique d'oxydation 4 et le filtre à particules 6.

En variante, les deux capteurs de température 24 et 25 peuvent être remplacés par des modules d'évaluation de la température.

Le système comprend, en outre, un unité de commande électronique 26, comprenant un module de commande 27 pour commander les injecteurs 7, 8, 9, 10 et 16.

En outre, l'unité de commande électronique 26 est munie d'un module de détermination 27a de l'état de fonctionnement respectif des deux éléments catalytiques d'oxydation 3 et 4. Le module de détermination 27a comprend un premier module de comparaison 28 et un deuxième module de comparaison 29.

Les injecteurs 7, 8, 9, 10 et 16 sont respectivement connectés au module de commande 27 par des connexions 30, 31, 32, 33 et 34.

Les pompes à carburant 20, 21, 22, 23 et 19 sont respectivement connectées à l'unité de commande électronique 26 par des connexions 35, 36, 37, 38 et 39.

Le capteur de pression 18 est connecté à l'unité de commande électronique 26 par une connexion 40.

En outre, les premier et deuxième capteurs de température 24 et 25 sont respectivement connectés au module de détermination 27a par des connexions 41 et 42.

Lorsque le filtre à particules 6 reste colmaté malgré les phases de régénération effectuées durant des phases de roulage du véhicule, lors d'un entretien du véhicule, le contrôle de l'état de fonctionnement du dispositif catalytique est testé au moyen de l'invention, tandis que le véhicule est immobile.

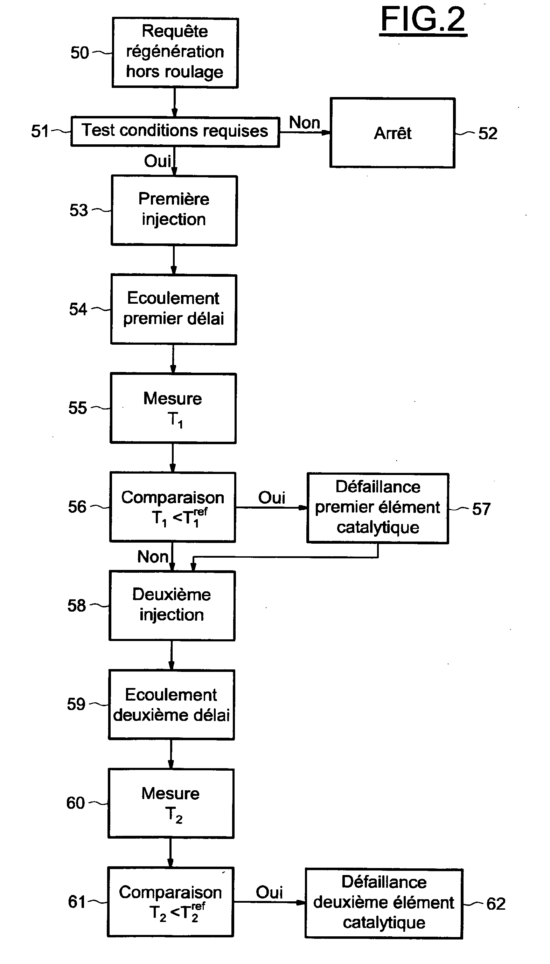

Tel qu'illustré sur la figure 2, le diagnostic débute par une requête en régénération du filtre à particules 6, hors roulage du véhicule (étape 50).

Cette requête peut être générée, par exemple, par un outil logiciel exécuté sur une unité de commande électronique externe pouvant être connectée à ladite unité de commande électronique 26, et non représentée.

Des conditions requises pour effectuer le contrôle de l'état de fonctionnement des deux éléments catalytiques d'oxydation, sont alors testées (étape 51).

A cet effet, l'unité de contrôle électronique 26 vérifie si l'ensemble des conditions suivantes sont respectées :
- la commande desdites deux injections successives est régulièrement effectuée ;
- le véhicule est à l'arrêt;
- aucun défaut de fonctionnement du capteur de vitesse du véhicule n'est détecté ;
- aucun défaut de fonctionnement d'un des capteurs de température 24 et 25 n'est détecté ;
- aucun défaut de fonctionnement de l'injecteur additionnel 16 n'est délecté ; et
- aucun défaut de fonctionnement de la pompe d'alimentation en carburant 19 n'est détecté.

Si une de ces conditions n'est pas remplie, le contrôle est arrêté (étape 52).

Sinon, une première injection prédéterminée de carburant dans le moteur 2 est effectuée au moyen des injecteurs 7, 8, 9 et 10 (étape 53).

Lors de l'écoulement d'un premier délai prédéterminé, on mesure la température T₁ des gaz d'échappement en aval du premier élément catalytique d'oxydation 3 au moyen du capteur de température 24. Le module de détermination 27 effectue alors, au moyen du premier module de comparaison 28, la comparaison de la mesure effectuée T₁ avec une première température de consigne T₁^{ref} (étape 55).

Si la première température mesurée T₁ est inférieure à la première température de consigne T₁^{ref}, alors le système détecte une défaillance du premier élément catalytique 3 (étape 57).

Puis, une deuxième injection prédéterminée de carburant est effectuée dans la ligne d'échappement, entre les deux éléments catalytiques 3 et 4, au moyen de l'injecteur additionnel 16 (étape 58).

Lors de l'écoulement du deuxième délai prédéterminé, on mesure la température T₂ en aval du deuxième élément catalytique 4 au moyen du deuxième capteur de température 25. Le module de détermination 27 effectue alors, au moyen du deuxième module de comparaison 29, une comparaison entre la deuxième mesure de température T₂ et une deuxième température de consigne 1₂^{ref} (étape 60).

Si la deuxième mesure de température T₂ est inférieure à la deuxième température de consigne T₂^{ref}, alors une défaillance du deuxième élément catalytique 4 est détectée (étape 62).

Par exemple, la première température de consigne T₁^{ref} est de l'ordre de 300°C, et la deuxième température de consigne est de l'ordre de 200°C.

Aussi, l'invention permet de contrôler efficacement, et à coût réduit, l'état de fonctionnement des deux éléments catalytiques d'oxydation, et de déterminer si l'un, ou l'autre, ou les deux, ont un fonctionnement défaillant.

## Revendications

1. Système de contrôle de l'état de fonctionnement d'un dispositif catalytique comprenant deux éléments catalytiques d'oxydation (3, 4) disposés en série dans la ligne d'échappement (1) d'un moteur à combustion interne (2), ledit système comprenant une unité de commande électronique (26), et au moins un injecteur commandé (7, 8, 9, 10) de carburant dans le moteur (2), **caractérisé en ce qu'**il comprend:
- un injecteur additionnel commandé (16) de carburant, disposé entre les deux éléments catalytiques (3, 4),
- des premiers et deuxièmes moyens de détermination d'une première température (T₁) et d'une deuxième température (T₂) des gaz d'échappement du moteur, respectivement entre les deux éléments catalytiques (3, 4), et en aval du deuxième élément catalytique (4),
- des moyens de commande (27) de deux injections successives prédéterminées, respectivement de carburant dans le moteur (2), et entre lesdits deux éléments catalytiques (3, 4), et
- des moyens de détermination (27a) de l'état de fonctionnement respectif des deux éléments catalytiques (3, 4) en fonction desdites première et deuxième températures (T₁, T₂) obtenues respectivement durant un premier délai prédéterminé et durant un deuxième délai prédéterminé, commençant respectivement auxdites première et deuxième injections, et en fonction d'une première température de consigne (T₁^{ref}) et d'une deuxième température de consigne (T₂^{ref}).

2. Système selon la revendication 1, dans lequel lesdits moyens de détermination (27a) de l'état de fonctionnement respectif des deux éléments catalytiques (3, 4) comprennent des premiers moyens de comparaison (28) de ladite première température (T₁) durant ledit premier délai prédéterminé et de ladite première température de consigne (T₁^{ref}), et des deuxièmes moyens de comparaison (29) de ladite deuxième température (T₂) durant ledit deuxième délai prédéterminé et de ladite deuxième température de consigne (T₂^{ref}).

3. Système selon la revendication 1 ou 2, dans lequel lesdits moyens de détermination (27a) de l'état de fonctionnement respectif des deux éléments catalytiques (3, 4) sont adaptés pour être désactivés lorsque le véhicule est en mouvement, lorsqu'un défaut de fonctionnement du capteur de vitesse du véhicule est détecté, lorsqu'un défaut de fonctionnement d'un desdits premier ou deuxième moyens de détermination de température est détecté, lorsqu'un défaut de commande desdites deux injections successives prédéterminées est détecté, ou lorsqu'un défaut de fonctionnement dudit injecteur additionnel commandé (16) ou de sa pompe d'alimentation en carburant (19) est détecté.

4. Système selon l'une des revendications 1 à 3, dans lequel, lesdits premiers et deuxièmes moyens de détermination d'une première température (T1) et d'une deuxième température (T2) des gaz d'échappement du moteur comprennent respectivement un premier capteur de température (24) et un deuxième capteur de température (25).

5. Système selon l'une des revendications 1 à 4, dans lequel lesdits moyens de détermination (27a) de l'état de fonctionnement respectif des deux éléments catalytiques (3, 4) sont adaptés pour déterminer une défaillance du premier élément catalytique (3) lorsque ladite première température (T₁) durant ledit premier délai prédéterminé reste intérieure à à ladite première température de consigne (T₁^{ref}).

6. Système selon l'une des revendications 1 à 5, dans lequel lesdits moyens de détermination (27a) de l'état de fonctionnement respectif des deux éléments catalytiques (3, 4) sont adaptés pour déterminer une défaillance du deuxième élément catalytique (4) lorsque ladite deuxième température (T₂) durant ledit deuxième délai prédéterminé reste inférieure à ladite deuxième température de consigne (T₂^{ref}).

7. Procédé de contrôle de l'état de fonctionnement d'un dispositif catalytique comprenant deux éléments catalytiques d'oxydation (3, 4) disposés en série dans la ligne d'échappement (1) d'un moteur à combustion interne (2), **caractérisé en ce que** l'on commande deux injections successives prédéterminées (53, 58), respectivement de carburant dans le moteur (2) et entre lesdits éléments catalytiques (3, 4), et on détermine l'état de fonctionnement respectif des deux éléments catalytiques (3, 4) en fonction d'une première température (T₁) entre les deux éléments catalytiques (3, 4) durant un premier délai prédéterminé, d'une deuxième température (T₂) en aval du deuxième élément catalytique (4) durant un deuxième délai prédéterminé, d'une première température de consigne (T₁^{ref}), et d'une deuxième température de consigne (T₂^{ref}), lesdits premier et deuxième délais prédéterminés commençant respectivement auxdites première et deuxième injections.

8. Procédé selon la revendication 7, dans lequel la détermination de l'état de fonctionnement respectif des deux éléments catalytiques (3, 4) comprend une première comparaison (55) de ladite première température (T₁) durant ledit premier délai prédéterminé et de ladite première température de consigne (T₁^{ref}), et une deuxième comparaison (60) de ladite deuxième température (T₂) durant ledit deuxième délai prédéterminé et de ladite deuxième température de consigne (T₂^{ref}).

9. Procédé selon la revendication 7 ou 8, dans lequel on désactive la détermination de l'état de fonctionnement respectif des deux éléments catalytiques (3, 4) lorsque le véhicule est en mouvement, lorsqu'un défaut de fonctionnement du capteur de vitesse du véhicule est détecté, lorsqu'un défaut de fonctionnement d'un desdits premier ou deuxième moyens de détermination de température est détecté, lorsqu'un défaut de commande desdites deux injections successives prédéterminées est détecté, ou lorsqu'un défaut de fonctionnement dudit injecteur additionnel commandé (16) ou de sa pompe d'alimentation en carburant (19) est détecté.

10. Procédé selon l'une des revendications 7 à 9, dans lequel on détermine une défaillance respective du premier ou deuxième élément catalytique (3, 4) lorsque ladite première ou deuxième température (T₁, T₂) durant ledit premier ou deuxième délai prédéterminé reste respectivement inférieure à ladite première ou deuxième température de consigne (T₁^{ref}, T₂^{rer}).

## Claims

1. System for monitoring the operating condition of a catalytic device comprising two catalytic oxidation elements (3, 4) arranged in series in the exhaust pipe (1) of an internal combustion engine (2), said system comprising an electronic control unit (26), and at least one controlled injector (7, 8, 9, 10) for injecting fuel into the engine (2), **characterized in that** it comprises:
- an additional controlled fuel injector (16), arranged between the two catalytic elements (3, 4);
- first and second means of determining a first temperature (T₁) and a second temperature (T₂) of the exhaust gases of the engine, between the two catalytic elements (3, 4), and downstream of the second catalytic element (4), respectively;
- means of controlling (27) two successive preset injections of fuel, into the engine (2) and between said two catalytic elements (3, 4) respectively; and
- means of determining (27a) the respective operating conditions of the two catalytic elements (3, 4) according to said first and second temperatures (T₁, T₂) obtained during a first preset time and during a second preset time respectively, starting with said first and second injections respectively, and according to a first reference temperature (T₁^{ref}) and a second reference temperature (T₂^{ref}).

2. System according to Claim 1, in which said means of determining (27a) the respective operating conditions of the two catalytic elements (3, 4) comprise first means of comparing (28) said first temperature (T₁) during said first preset time and said first reference temperature (T₁^{ref}), and second means of comparing (29) said second temperature (T₂) during said second preset time and said second reference temperature (T₂^{ref}).

3. System according to Claim 1 or 2, in which said means of determining (27a) the respective operating conditions of the two catalytic elements (3, 4) are designed to be deactivated when the vehicle is moving, when an operating fault in the speed sensor of the vehicle is detected, when an operating fault in one of said first or second means of determining temperature is detected, when a fault in the control of said two successive preset injections is detected, or when an operating fault in said additional controlled injector (16) or its fuel supply pump (19) is detected.

4. System according to one of Claims 1 to 3, in which said first and second means of determining a first temperature (T₁) and a second temperature (T₂) of the exhaust gases of the engine comprise a first temperature sensor (24) and a second temperature sensor (25) respectively.

5. System according to one of Claims 1 to 4, in which said means of determining (27a) the respective operating conditions of the two catalytic elements (3, 4) are designed to determine a fault in the first catalytic element (3) when said first temperature (T₁) during said first preset time remains lower than said first reference temperature (T₁^{ref}).

6. System according to one of Claims 1 to 5, in which said means of determining (27a) the respective operating conditions of the two catalytic elements (3, 4) are designed to determine a fault in the second catalytic element (4) when said second temperature (T₂) during said second preset time remains lower than said second reference temperature (T₂^{ref}).

7. Method for monitoring the operating condition of a catalytic device comprising two catalytic oxidation elements (3, 4) arranged in series in the exhaust pipe (1) of an internal combustion engine (2), **characterized in that** two successive preset injections (53, 58) of fuel are carried out, into the engine (2) and between said catalytic elements (3, 4) respectively, and the respective operating conditions of the two catalytic elements (3, 4) are determined according to a first temperature (T₁) between the two catalytic elements (3, 4) during a first preset time, a second temperature (T₂) downstream of the second catalytic element (4) during a second preset time, a first reference temperature (T₁^{ref}), and a second reference temperature (T₂^{ref}), said first and second preset times starting with said first and second injections respectively.

8. Method according to Claim 7, in which the determination of the respective operating conditions of the two catalytic elements (3, 4) comprises a first comparison (55) of said first temperature (T₁) during said first preset time and said first reference temperature (T₁^{ref}), and a second comparison (60) of said second temperature (T₂) during said second preset time and said second reference temperature (T₂^{ref}).

9. Method according to Claim 7 or 8, in which the determination of the respective operating conditions of the two catalytic elements (3, 4) is deactivated when the vehicle is moving, when an operating fault in the speed sensor of the vehicle is detected, when an operating fault in one of said first or second means of determining temperature is detected, when a fault in the control of said two successive preset injections is detected, or when an operating fault in said additional controlled injector (16) or its fuel supply pump (19) is detected.

10. Method according to one of Claims 7 to 9, in which a respective fault in the first or second catalytic element (3, 4) is determined when said first or second temperature (T₁, T₂) during said first or second preset time remains lower than said first or second reference temperature (T₁^{ref}, T₂^{ref}) respectively.

## Patentansprüche

1. System zur Überwachung des Betriebszustands einer katalytischen Vorrichtung, die zwei katalytische Oxidationselemente (3, 4) enthält, die in Reihe in der Auspuffanlage (1) eines Verbrennungsmotors (2) angeordnet sind, wobei das System eine elektronische Steuereinheit (26) und mindestens eine gesteuerte Einspritzdüse (7, 8, 9, 10) von Kraftstoff in den Motor (2) enthält, **dadurch gekennzeichnet, dass** es enthält:
- eine zusätzliche gesteuerte Kraftstoffeinspritzdüse (16), die zwischen den zwei katalytischen Elementen (3, 4) angeordnet ist,
- erste und zweite Einrichtungen zur Bestimmung einer ersten Temperatur (T₁) und einer zweiten Temperatur (T₂) der Abgase des Motors zwischen den zwei katalytischen Elementen (3, 4) bzw. hinter dem zweiten katalytischen Element (4),
- Einrichtungen (27) zur Steuerung von zwei vorbestimmten aufeinanderfolgenden Einspritzvorgängen von Kraftstoff in den Motor (2) bzw. zwischen den zwei katalytischen Elementen (3, 4), und
- Einrichtungen (27a) zur Bestimmung des jeweiligen Betriebszustands der zwei katalytischen Elemente (3, 4) in Abhängigkeit von den ersten und zweiten Temperaturen (T₁, T₂), die während einer ersten vorbestimmten Zeitspanne bzw. während einer zweiten vorbestimmten Zeitspanne erhalten werden, beginnend beim ersten bzw. beim zweiten Einspritzvorgang, und in Abhängigkeit von einer ersten Solltemperatur (T₁^{ref}) und von einer zweiten Solltemperatur (T₂^{ref}).

2. System nach Anspruch 1, bei dem die Einrichtungen (27a) zur Bestimmung des jeweiligen Betriebszustands der zwei katalytischen Elemente (3, 4) erste Einrichtungen (28) zum Vergleich der ersten Temperatur (T₁) während der ersten vorbestimmten Zeitspanne mit der ersten Solltemperatur (T₁^{ref}) und zweite Einrichtungen (29) zum Vergleich der zweiten Temperatur (T2) während der zweiten vorbestimmten Zeitspanne mit der zweiten Solltemperatur (T₂^{ref}) enthalten.

3. System nach Anspruch 1 oder 2, bei dem die Einrichtungen (27a) zur Bestimmung des jeweiligen Betriebszustands der zwei katalytischen Elemente (3, 4) geeignet sind, um deaktiviert zu werden, wenn das Fahrzeug in Bewegung ist, wenn ein Betriebsfehler des Geschwindigkeitssensors des Fahrzeugs erfasst wird, wenn ein Betriebsfehler einer der ersten oder zweiten Temperaturbestimmungseinrichtungen erfasst wird, wenn ein Fehler der Steuerung der zwei vorbestimmten aufeinanderfolgenden Einspritzvorgänge erfasst wird, oder wenn ein Betriebsfehler der zusätzlichen gesteuerten Einspritzdüse (16) oder ihrer Kraftstoffversorgungspumpe (19) erfasst wird.

4. System nach einem der Ansprüche 1 bis 3, bei dem die ersten und die zweiten Einrichtungen zur Bestimmung einer ersten Temperatur (T₁) und einer zweiten Temperatur (T₂) der Abgase des Motors einen ersten Temperatursensor (24) bzw. einen zweiten Temperatursensor (25) enthalten.

5. System nach einem der Ansprüche 1 bis 4, bei dem die Einrichtungen (27a) zur Bestimmung des jeweiligen Betriebszustands der zwei katalytischen Elemente (3, 4) geeignet sind, um einen Ausfall des ersten katalytischen Elements (3) festzustellen, wenn die erste Temperatur (T₁) während der ersten vorbestimmten Zeitspanne unter der ersten Solltemperatur (T₁^{ref}) bleibt.

6. System nach einem der Ansprüche 1 bis 5, bei dem die Einrichtungen (27a) zur Bestimmung des jeweiligen Betriebszustands der zwei katalytischen Elemente (3, 4) geeignet sind, um einen Ausfall des zweiten katalytischen Elements (4) festzustellen, wenn die zweite Temperatur (T₂) während der zweiten vorbestimmten Zeitspanne unter der zweiten Solltemperatur (T₂^{ref}) bleibt.

7. Verfahren zur Überwachung des Betriebszustands einer katalytischen Vorrichtung, die zwei katalytische Oxidationselemente (3, 4) enthält, die in Reihe in der Auspuffanlage (1) eines Verbrennungsmotors (2) angeordnet sind, **dadurch gekennzeichnet, dass** zwei vorbestimmte aufeinanderfolgende Einspritzvorgänge (53, 58) von Kraftstoff in den Motor (2) bzw. zwischen die katalytischen Elemente (3, 4) gesteuert werden, und der jeweilige Betriebszustand der zwei katalytischen Elemente (3, 4) in Abhängigkeit von einer ersten Temperatur (T₁) zwischen den zwei katalytischen Elementen (3, 4) während einer ersten vorbestimmten Zeitspanne, einer zweiten Temperatur (T₂) hinter dem zweiten katalytischen Element (4) während einer zweiten vorbestimmten Zeitspanne, einer ersten Solltemperatur (T₁^{ref}) und einer zweiten Solltemperatur (T₂^{ref}) bestimmt wird, wobei die erste und die zweite vorbestimmte Zeitspanne beim ersten bzw. beim zweiten Einspritzvorgang beginnen.

8. Verfahren nach Anspruch 7, bei dem die Bestimmung des jeweiligen Betriebszustands der zwei katalytischen Elemente (3, 4) einen ersten Vergleich (55) der ersten Temperatur (T₁) während der ersten vorbestimmten Zeitspanne mit der ersten Solltemperatur (T₁^{ref}) und einen zweiten Vergleich (60) der zweiten Temperatur (T₂) während der zweiten vorbestimmten Zeitspanne mit der zweiten Solltemperatur (T₂^{ref}) enthält.

9. Verfahren nach Anspruch 7 oder 8, bei dem die Bestimmung des jeweiligen Betriebszustands der zwei katalytischen Elemente (3, 4) deaktiviert wird, wenn das Fahrzeug in Bewegung ist, wenn ein Betriebsfehler des Geschwindigkeitssensors des Fahrzeugs erfasst wird, wenn ein Betriebsfehler einer der ersten oder zweiten Temperaturbestimmungseinrichtungen erfasst wird, wenn ein Fehler der Steuerung der zwei vorbestimmten aufeinanderfolgenden Einspritzvorgänge erfasst wird, oder wenn ein Betriebsfehler der zusätzlichen gesteuerten Einspritzdüse (16) oder ihrer Kraftstoffversorgungspumpe (19) erfasst wird.

10. Verfahren nach einem der Ansprüche 7 bis 9, bei dem ein Ausfall des ersten bzw. zweiten katalytischen Elements (3, 4) festgestellt wird, wenn die erste oder zweite Temperatur (T₁, T₂) während der ersten oder zweiten vorbestimmten Zeitspanne unter der ersten bzw. zweiten Solltemperatur (T₁^{ref}, T₂^{ref}) bleibt.
